# EUROPEAN PATENT APPLICATION

(11) **EP 2 525 584 A2**
(43) Date of publication of application: **21.11.2012**
(21) Application number: 12164226.8
(22) Date of filing: 16.04.2012
(51) Int. Cl.: H04N 13/04, H04N 13/00

(54) **Display control device, display control method, program, and recording medium**

(30) Priority: 18.05.2011 JP 2011111310
(71) Applicant: Sony Corporation, Tokyo 108-0075 (JP)
(72) Inventor: Ishii, Toshisada, Tokyo (JP)
(74) Representative: Beder, Jens

(57) **Abstract**

An apparatus includes a detector and a display controller. The detector is configured to detect an inclination angle of a display surface of a display unit. The display controller is configured to control the display unit to display a plurality of menu items disposed along a depth direction perpendicular to the display surface, and to shift the plurality of menu items in a direction parallel to the display surface based on the inclination angle detected by the detector.

## Description

### CROSS-REFERENCE TO RELATED APPLICATIONS

The present application is based upon and claims the benefit of priority under 35 U.S.C. §119 of Japanese Priority Patent Application JP 2011-111310 filed in the Japanese Patent Office on May 18, 2011, the entire contents of which are hereby incorporated by reference.

### BACKGROUND

The present disclosure relates to a display control device, a display control method, a program, and a recording medium, particularly, to a display control device, a display control method, a program, and a recording medium that can provide a stereoscopic display method of a menu item without limiting the number of items.

Portable terminals equipped with a relatively large display, such as a smart phone or a tablet terminal, have come into the market. Further, recently, some of portable terminals have been equipped with a 3D display that can provide stereoscopic view for the naked eye, as a display device.

There are 2D displays in the related art which display 3D menu items, such as displaying a selectable menu item on each surface of a polyhedron or a rectangular column, before 3D displays are employed (for example, see Japanese Unexamined Patent Application Publication No. 2006-79281 and Japanese Unexamined Patent Application Publication No. 9-160739).

### SUMMARY

Various aspects and features of the invention are defined in the appended claims.

However, in the method of displaying a menu item on each surface of a polyhedron or a rectangular column in the related art has a difficulty in displaying a large number of menu items because the number of displayable items is limited by the number of surfaces of the polyhedron or the rectangular column. Further, it is necessary to increase the number of surfaces in order to display a large number of menu items, but the display area for one item decreases with the increase of the number of surfaces, such that the amount of displayable information decreases, fine positioning is necessary, or the operability deteriorates.

It is desirable to provide a method of stereoscopically displaying a menu item without limiting the number of items.

The present invention broadly comprises an apparatus, a method, and a non-transitory computer readable medium encoded with a program for causing a processor to perform the method. In one embodiment, the apparatus includes a detector and a display controller. The detector is configured to detect an inclination angle of a display surface of a display unit. The display controller is configured to control the display unit to display a plurality of menu items disposed along a depth direction perpendicular to the display surface, and to shift the plurality of menu items in a direction parallel to the display surface based on the inclination angle detected by the detector. According to an embodiment of the present disclosure, it is possible to provide a method of stereoscopically displaying menu items without limiting the number of items.

### BRIEF DESCRIPTION OF THE DRAWINGS

Embodiments of the invention will now be described with reference to the included drawings throughout which like parts are denoted with like references and in which
Fig. 1 is a view showing an example of the external configuration of an information processing terminal according to an embodiment of the present disclosure.
Fig. 2 is a view illustrating the configuration of a 3D display unit.
Fig. 3 is a view illustrating the configuration of the 3D display unit.
Fig. 4 is a block diagram showing an example of a hardware configuration of the information processing terminal.
Figs. 5A and 5B are views illustrating detecting an inclination of the information processing terminal.
Figs. 6A to 6C are views showing examples of a menu screen according to an inclination of the information processing terminal.
Figs. 7A and 7B are views showing examples of the menu screen according to the inclinations of the information processing terminal.
Figs. 8A and 8B are views illustrating menu screens according to the inclinations of the information processing terminal.
Fig. 9 is a flowchart illustrating a menu screen display process.
Figs. 10A and 10B are views illustrating another method of a "send" operation and a "return" operation.
Fig. 11 is a block diagram showing an example of the configuration of an embodiment of a computer where the present disclosure is applied.

### DETAILED DESCRIPTION OF EMBODIMENTS

### [Example of external configuration of image processing terminal]

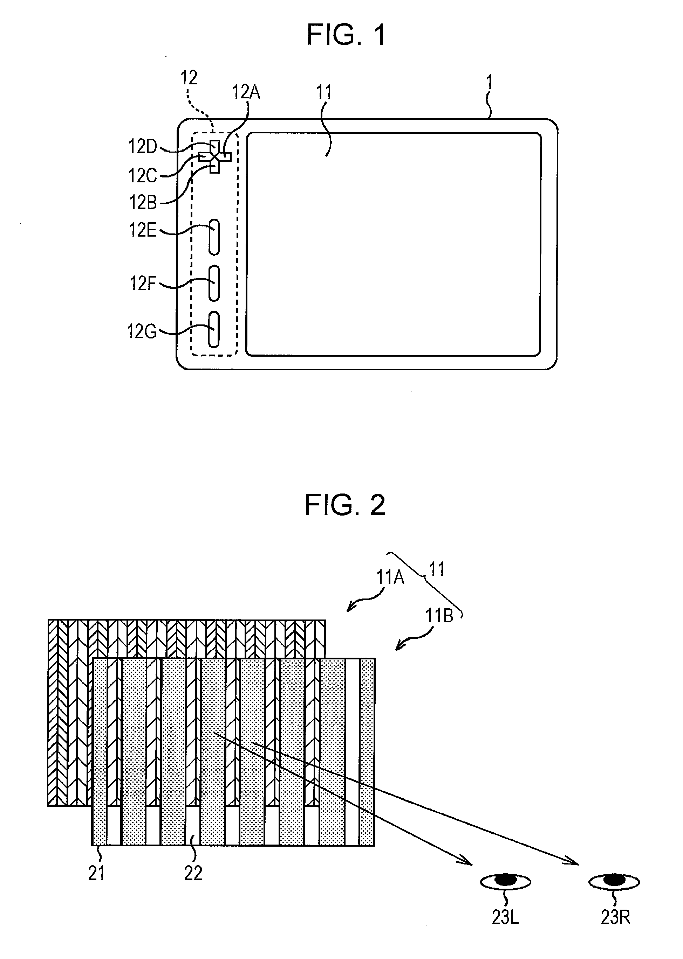

Fig. 1 is a view showing an example of the external configuration of an information processing terminal according to an embodiment of the present disclosure.

An information processing terminal 1 shown in Fig. 1 is a portable terminal, such as a PDA (Personal Digital Assistant) or a PND (Portable Navigation Device), which has a case sized such that a user can carry it with one hand.

A 3D display unit 11, such as an LCD (Liquid Crystal Display) is disposed on the front of the case of the information processing terminal 1. The 3D display unit 11 is equipped with a touch panel (not shown) and a user can directly operate the information displayed on the 3D display unit 11 with their fingers.

A plurality of operation buttons 12 is disposed around the 3D display unit 11 of the information processing terminal 1. The operation buttons 12, for example, include arrow keys 12A to 12D corresponding to four direction of up, down, left, and right, an enter key 12E, a return key 12F, and a home key 12G.

In Fig. 1, it is assumed hereafter that the long sides of the information processing terminal 1 are arranged in the transverse direction and the short sides are arranged in the vertical direction.

### [Example of configuration of 3D display unit 11]

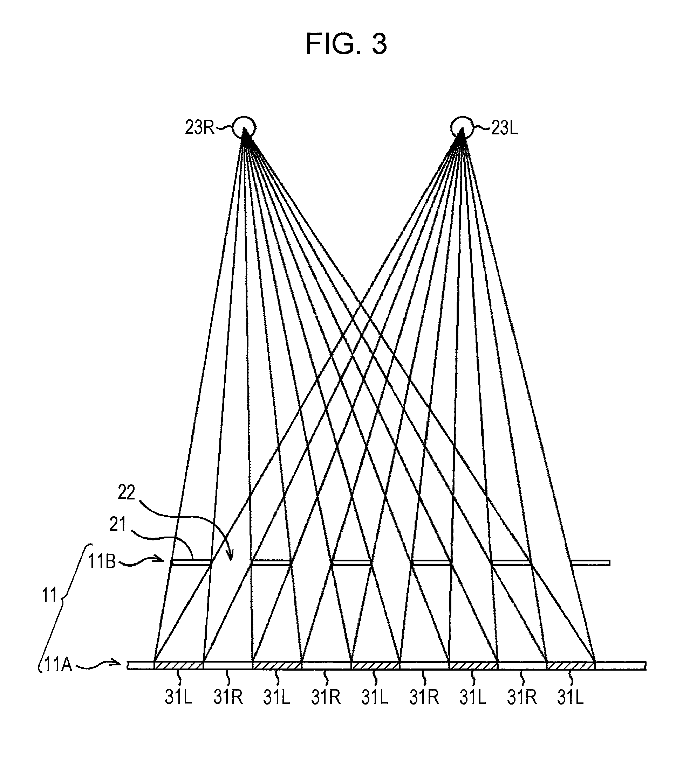

The configuration of the 3D display unit 11 is described with reference to Figs. 2 and 3.

The 3D display unit 11 is a display that can implement a stereoscopic view with the naked eye. There is a parallax barrier type or a lenticular type in the stereoscopic display type that can implement a stereoscopic view for the naked eye without wearing specific glasses. In the present embodiment, the 3D display unit 11 of the information processing terminal 1 can implement a stereoscopic view of the parallax barrier type, but other stereoscopic display types may also be employed as the 3D display unit 11.

The 3D display unit 11, as shown in Fig. 2, is formed by stacking a parallax barrier 11B on the front (user side) of an LCD 11A. Fig. 3 is a view of the 3D display unit 11 of Fig. 2, seen from above. Further, the touch panel (not shown) is, for example, stacked further on the front of the parallax barrier 11B.

The parallax barrier 11B is formed by alternately disposing shields 21 that block display image light from the LCD 11A and reed-shaped slits 22 that transmit the display image light, in the transverse direction of the 3D display unit 11.

In order to implement a stereoscopic view, it is necessary to show different parallax images at the left eye 23L and the right eye 23R, such that at least two parallax images for the right-eye image and the left-eye image are necessary. The right-eye image is displayed by the pixels (group) 31R and the left-eye image is displayed by the pixels (group) 31L, in the LCD 11A.

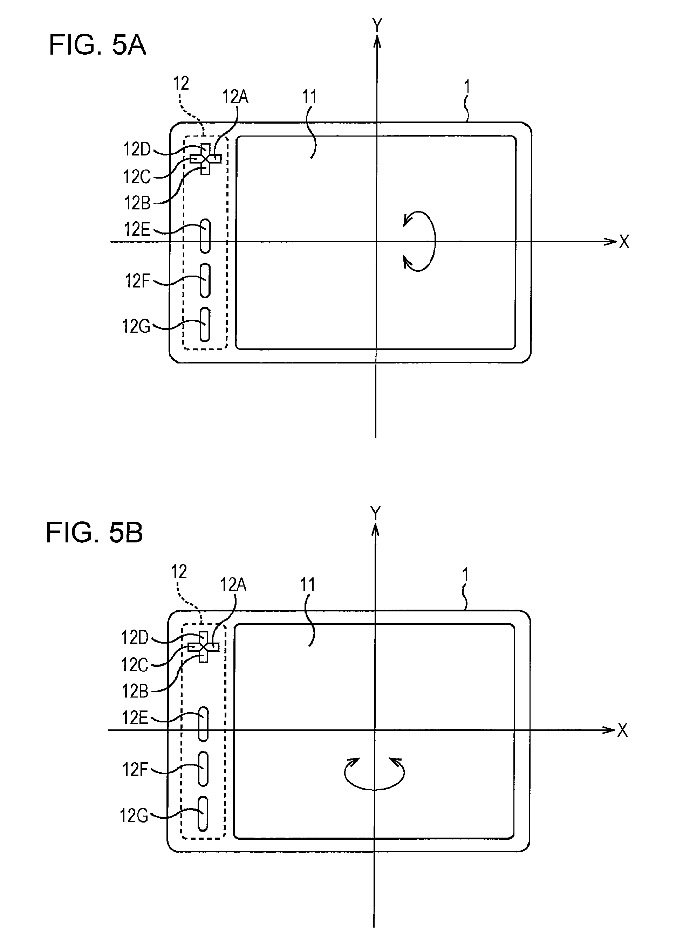

Therefore, in the LCD 11A, images having the same parallax are displayed in the vertical direction while the right-eye image and the left eye-image that are divided are alternately disposed in the transverse direction. Further, the transverse direction corresponds to the X-axial direction of Fig. 5, which is described below, and the vertical direction corresponds to the Y-axial direction of Fig. 5. Further, when the shields 21 and the slits 22 are alternately disposed in the vertical direction in the parallax barrier 11B, the direction in which images having the same parallax on the LCD 11A are displayed is inverted.

The light flux of the right-eye image and the left-eye image from the LCD 11A is divided left and right by the parallax barrier 11B and converged to the right eye 23R and the left eye 23L. That is, only the light flux of the right-eye image reaches the right eye 23R and only the light flux of the image for left-eye reaches the left eye 23L. Therefore, the user can stereoscopically recognize the image displayed on the LCD 11A.

Further, it is possible to create a multiscopic view, when using three or more parallax images. As the number of parallax images increases, a stereoscopic view according to a change in viewpoint position of an observer can be implemented. The 3D display unit 11 may implement a multiscopic view using three or more parallax images.

### [Example of configuration of information processing terminal 1]

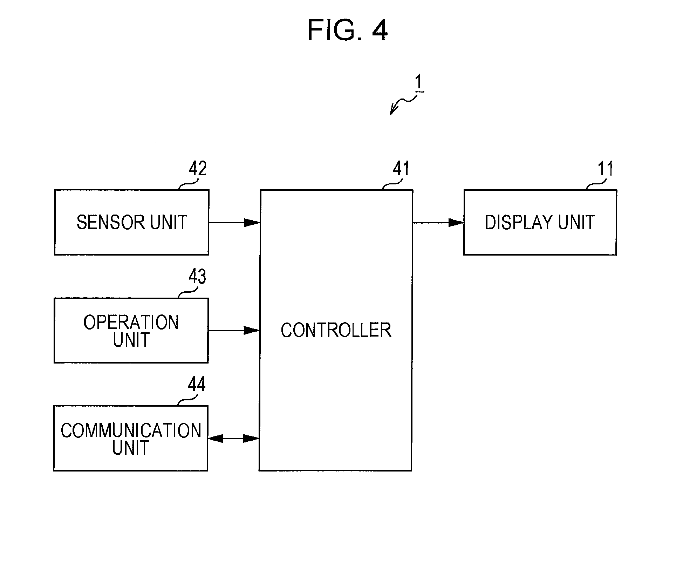

Fig. 4 is a block diagram showing an example of the hardware configuration of the information processing terminal 1.

The information processing terminal 1 includes a controller 41, a sensor unit 42, an operation unit 43, and a communication unit 44, in addition to the 3D display unit 11 shown in Fig. 1. The operation unit 43 includes the operation buttons 12 in Fig. 1 and the touch panel (not shown).

The controller 41 includes a CPU (Central Processing Unit), a ROM (Read Only Memory), and a RAM (Random Access Memory). The CPU of the controller 41 controls the entire operation of the information processing terminal 1 on the basis of information acquired by the sensor unit 42 or the operation unit 43 or the like, by loading programs from the ROM and executing the programs by using the RAM. The controller 41 also performs a display control process for creating parallax images allowing a stereoscopic view to be implemented and displaying the images on the 3D display unit 11.

The sensor unit 42 is, for example, implemented by a gyro sensor that detects a rotation angle (angular velocity or angular acceleration) about each of the X axis and the Y axis. The X axis indicates the direction (transverse direction) in which the substantially rectangular information processing terminal 1 is long, the Y axis indicates the direction perpendicular to the X axis, and the display surface of the 3D display unit 11 is implemented by the XY plane. The sensor unit 42 detects the inclination (rotation about the axes) of the information processing unit 1 and outputs the detection result to the controller 41.

The operation unit 43 detects an operation by the user from the operation buttons 12 and the touch panel, and outputs the operation information to the controller 41.

The communication unit 44 is connected to a network, such as a LAN (Local Area Network) or the Internet and communicates with other devices connected to the same network. For example, it is possible to display the information, such as a web page, received by the communication unit 44 on the 3D display unit 11.

### [Detection of inclination of information processing terminal 1]

Fig. 5 is a view illustrating detection of the inclination of the information processing terminal 1 by the sensor unit 42.

The sensor unit 42, as shown in Fig. 5A, detects the inclination of the information processing terminal 1 when rotating about the X axis.

Further, the sensor unit 42, as shown in Fig. 5B, also detects the inclination of the information processing terminal 1 when rotating about the Y axis.

### [Example of menu screen according to inclination of information processing terminal 1]

When a menu screen providing a plurality of menu items is displayed, the controller 41 changes a plurality of displayed menu items in accordance with the inclination of the information processing terminal 1 which is detected by the sensor unit 42.

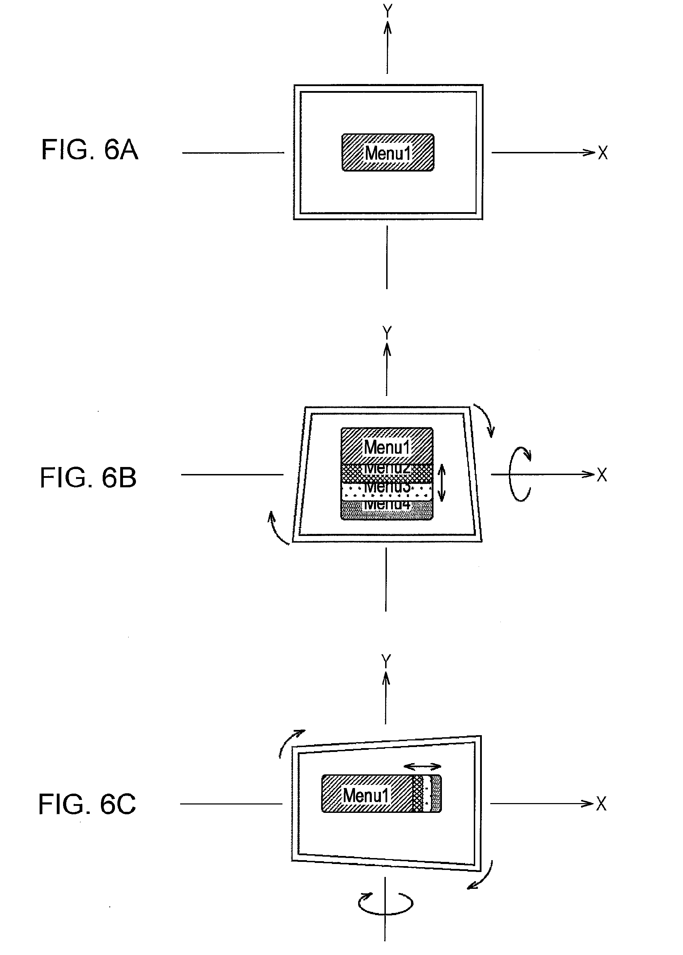

Detailed description is provided with reference to Figs. 6A to 8B.

Fig. 6A shows the initial screen of a menu screen.

In the initial screen, a plurality of selectable menu items is aligned in a predetermined order in the depth direction of the display screen. The predetermined order of the plurality of menu items is set to Menu 1, Menu 2, Menu 3, Menu 4, Menu 5, ···.

The display sizes of the menu items are the same and the Menu 2, Menu 3, Menu 4, Menu 5, ··· items are hidden by the Menu 1 disposed at the frontmost in the initial screen, such that the user can see only the Menu 1 in the initial screen shown in Fig. 6A.

In the initial screen, the user may not recognize that there are the other menu items under the menu 1. In order to allow recognizing that there are menu items under the Menu 1, it may be possible to display information (image information) showing that other menu items are disposed in the depth direction, such as shifting the Menu 2 and the following menu items or animating changes in the menu items according to the inclination of the information processing terminal 1, when the initial screen is displayed, which is described below.

When the user inclines forward/backward the information processing terminal 1 by rotating the information processing terminal 1 about the X axis, the menu screen is shown as in Fig. 6B. The controller 41 shifts the Menu 1, Menu 2, Menu 3, Menu 4, ··· disposed in the depth direction at predetermined intervals, in the up-down direction (Y direction) by a predetermined shifted amount according to the rotation angle of the information processing terminal 1 about the X axis.

On the other hand, when the user inclines left/right the information processing terminal 1 by rotating the information processing terminal 1 about the Y axis, the menu screen is shown as in Fig. 6C. The controller 41 shifts the Menu 1, Menu 2, Menu 3, Menu 4, ··· disposed in the depth direction at predetermined intervals, in the left-right direction (X direction) by a predetermined shifted amount according to the rotation angle of the information processing terminal 1 about the Y axis.

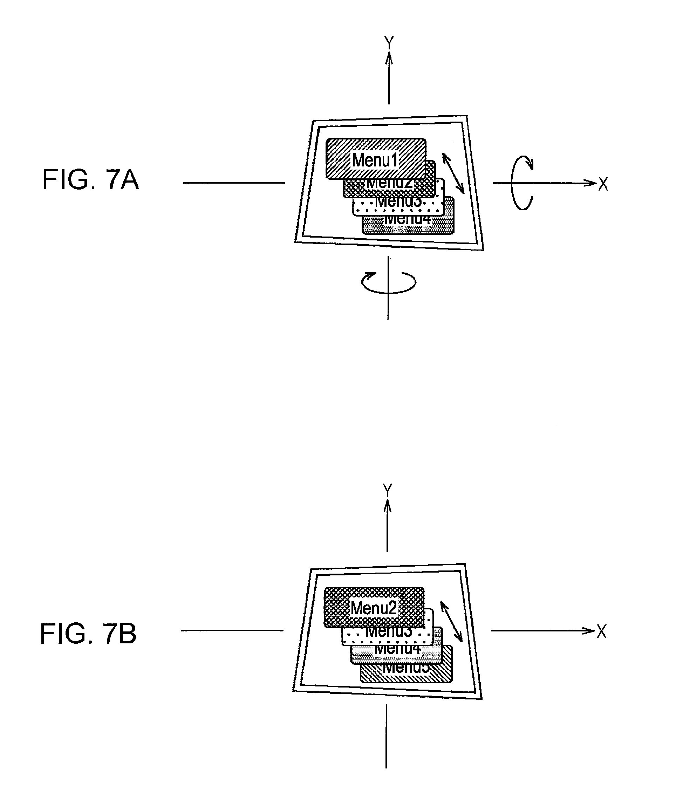

Fig. 7A shows an example of the menu screen when the user rotates the information processing terminal 1 simultaneously about the X axis and the Y axis. In Fig. 7A, the Menu 1, Menu 2, Menu 3, Menu 4, ··· are shifted in the up-down and left-right directions by predetermined shifted amounts according to the angles of the inclinations in the up-down and left-right directions.

In the information processing terminal 1, while the menu screen is displayed on the 3D display unit 11, a function of "send menu" is assigned, for example, to the arrow key 12A indicating the right direction in the arrow keys 12A to 12D corresponding to four directions of up, down, right, and left. In this case, a function of "return menu" is assigned to the arrow key 12C indicating the left direction.

Further, the menu item (Menu 1 in Fig. 7A) disposed at the frontmost in the Menu 1, Menu 2, Menu 3, Menu 4, ··· disposed at predetermined intervals in the depth direction of the screen is selected in the menu screen.

In the state shown in Fig. 7A, when the arrow key 12A of "send menu" is operated by the user, the controller 41 fades out the Menu 1 by moving the selected Menu 1 in the front direction of the screen. After the Menu 1 is faded out, as shown in Fig. 7B, the Menu 2, Menu 3, Menu 4, Menu 5, ··· are displayed from the front of the screen. The position in the depth direction of the Menu 2 in Fig. 7B is the same as the position of the Menu 1 in Fig. 7A.

Further, in the state shown in Fig. 7B, when the arrow key 12C of "return menu" is operated by the user, the controller 41 fades in the Menu 1, which is one step earlier in the order than the selected Menu 2, there by displaying the menu screen shown in Fig. 7A. That is, the menu item disposed at the frontmost is removed by the operation of "return menu" and the menu item that is one step earlier than the menu item disposed at the frontmost is displayed by the operation of "return menu".

As described above, the arrow key 12A of "send menu" removes the menu item displayed at the frontmost and displays the menu item one step latter in the order is displayed at the front. The arrow key 12C of "return menu" moves back the menu item at the frontmost in the depth direction, such that the menu item one step earlier in the order is displayed at the frontmost.

The function of "send menu" and the function of "return menu" may be assigned to the arrow key 12D indicating the up-direction and the arrow key 12B indicating the downward-direction, respectively.

The user can select the menu item displayed at the frontmost by using the function of "send menu" and the function of "return menu" and execute a desired menu item by operating (pressing) the enter key 12E, with the desired menu item displayed at the frontmost.

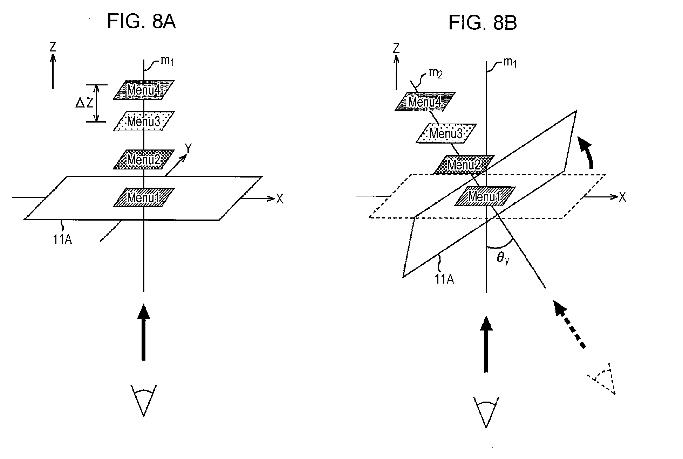

Figs. 8A and 8B are perspective views showing the stereoscopic position relationship of the menu items seen by a user viewing the menu screen displayed on the 3D display unit 11. Further, in Figs. 8A and 8B, the axis perpendicular to the XY plane, which corresponds to the depth direction of the menu screen is the Z axis and Figs. 8A and 8B are perspective views sheen from the back of the menu screen.

Fig. 8A shows the stereoscopic position relationship of a plurality of menu items when the initial screen is displayed.

In the initial screen, the menu items of Menu 1, Menu 2, Menu 3, Menu 4, Menu 5, ··· are disposed at a predetermined interval ΔZ, with the centers of the menu items on the axis m₁ perpendicular to the XY plane.

When the user rotates the information processing terminal 1 by an angle of θy about the Y axis, the controller 41, as shown in Fig. 8B, shifts the menu items of the Menu 1, Menu 2, Menu 3, Menu 4, Menu 5, ··· by a predetermined shifted amount according to the angle 6y in the X-axial direction. In this regard, the shift amount may be equal to the depth of the respective menu item ·((n-1) ΔZ) times sin θy.

In Fig. 8B, the menu items are moved in the X-axial direction while facing the user side (the front) with the centers on the axis m₂. The axis m₂ is an axis perpendicular to the display surface of the LCD 11A after the rotation, which corresponds that the axis m1 is rotated by an angle θy of on the XZ plane. Therefore, the deeper the position is, the more the X-axial shifted amount of the display surfaces of the menu items increases.

Although Figs. 8A and 8B show an example when the information processing terminal 1 is rotated about the Y axis, the same result is achieved for rotation about the X axis.

As described above, the sensor unit 42 detects the inclination of the display surface of the 3D display unit 11. The controller 41 performs control of shifting a plurality of menu items in the direction parallel to the display surface, which are displayed in the depth direction perpendicular to the display surface, in accordance with the inclination of the detected display surface. Accordingly, it is possible to achieve the same effect as a stereoscopic view using motion parallax. According to the method of displaying a plurality of menu items, it is possible to display a plurality of menu items since the number of items is not limited, different from the method of displaying menu items on a polyhedron or a rectangular column in the related art. Further, since the display follows the inclination of the information processing terminal 1, intuitive operation is possible and the operability is improved.

### [Flow of menu screen display process]

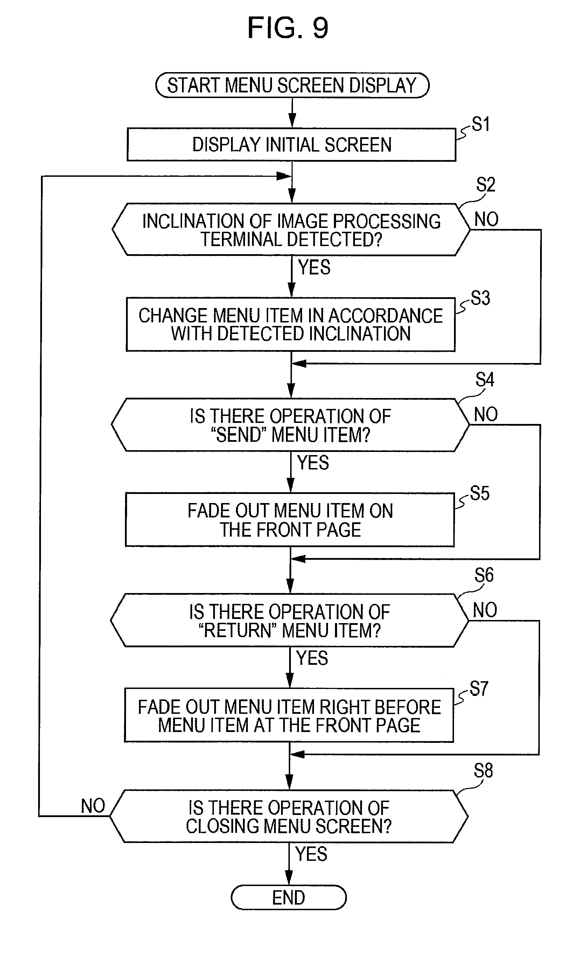

A menu screen display process of the information processing terminal 1 is described with reference to the flowchart of Fig. 9. The process is started when an instruction of displaying the menu screen is given in the information processing terminal 1.

First, in step S1, the controller 41 displays the initial screen of the menu screen on the 3D display unit 11. The next inclination of the information processing terminal 1 is detected, with the direction of the information processing terminal 1 when the initial screen is displayed as the front of the information processing terminal 1 facing the user.

In step S2, the controller 41 determines whether to detect the inclination of the information processing terminal 1. That is, the sensor unit 42 detects the inclination of the information processing terminal 1 and outputs the detection result to the controller 41. The controller 41 acquires the detection result of the senor unit 42 and determines whether the information processing terminal 1 is inclined from the reference surface displaying the initial screen.

In step S2, when it is determined that the inclination of the information processing terminal 1 is detected, the controller 41 changes the menu items displayed on the 3D display unit 11 in accordance with the detected inclination (angle θₓ about X axis and angle Oy about Y axis).

In step S2, when it is determined that the inclination of the information processing terminal 1 is not detected, the process of step S3 is skipped.

In step S4, the controller 41 determines whether there is a "send" operation for a menu item.

In step S4, when it is determined that there is a "send" operation for a menu item, that is, when the arrow key 12A indicating the right direction is operated, the process proceeds to step S5 and the controller 41 performs control of fading out the menu item at the frontmost.

On the other hand, when it is determined that there is no "send" operation for a menu item in step S4, the process of step S5 is skipped.

In step S6, the controller 41 determines whether there is a "return" operation for the menu items.

In step S6, when it is determined that there is a "return" operation for a menu item, that is, when the arrow key 12C indicating the left direction is operated, the process proceeds to step S7 and the controller 41 performs display control of fading in the menu item one step earlier in the order than the menu item at the frontmost.

On the other hand, when it is determined that there is no "return" operation for a menu item in step S6, the process of step S7 is skipped.

In step S8, the controller 41 determines whether there is operation for finishing the menu screen. When it is determined that there is no operation for finishing in step S8, the process returns to step S2 and the processes described above are repeated.

On the other hand, when it is determined that there is an operation for finishing in step S8, the menu screen display process is finished.

According to the menu screen display process, it is possible to select the menu items by intuitive and easy operations without limiting the number of items. In other words, it is possible to provide a method of stereoscopically displaying menu items without limiting the number of items.

### [Modified example]

Further, the embodiments of the present disclosure are not limited to those described above and may be modified in various ways without departing from the scope of the present disclosure.

For example, although two-axial rotation of the X axis and the Y axis is detected in the embodiment described above, it may be possible to detect rotation about any one of the axes and change displaying of the menu items only for the inclination of the information processing terminal 1 in any one of the up-down direction and the left-right direction. In this case, the sensor unit 42 may be a single-axis type of gyro sensor.

Further, when only the inclination of the information processing terminal 1 in any one of the up-down direction and the left-right direction is detected, it is preferable to detect rotation about the axis in the division direction of parallax images. For the information processing terminal 1 of Fig. 1, it is preferable to detect rotation about X axis. Since the shields 21 and the slits 22 of the 3D display unit 11 are formed in rectangular reed shapes that are long in the Y direction, the left-right viewing angles are further limited than the front-rear viewing angles.

Further, due to the same reason, the X-axial shifted amounts of the menu items corresponding to the left-right inclination (rotation about the Y axis) of the information processing terminal 1 may be larger than the Y-axial shifted amounts of the menu items corresponding to the front-rear inclination (rotation about the X axis) at the same angle. Since the inclination of the information processing terminal 1 is more limited in the left-right direction than the front-rear direction, the menu items that are disposed deeper are easily shown with small inclinations.

In the embodiment described above, the operation buttons for the "send" operation and the "return" operation of the menu items were fixedly assigned. However, the operation buttons for the "send" operation and the "return" operation may be dynamically assigned to any one of the right-, down-, left-, and up-arrow keys 12A to 12D in accordance with the deviation directions of the menu items.

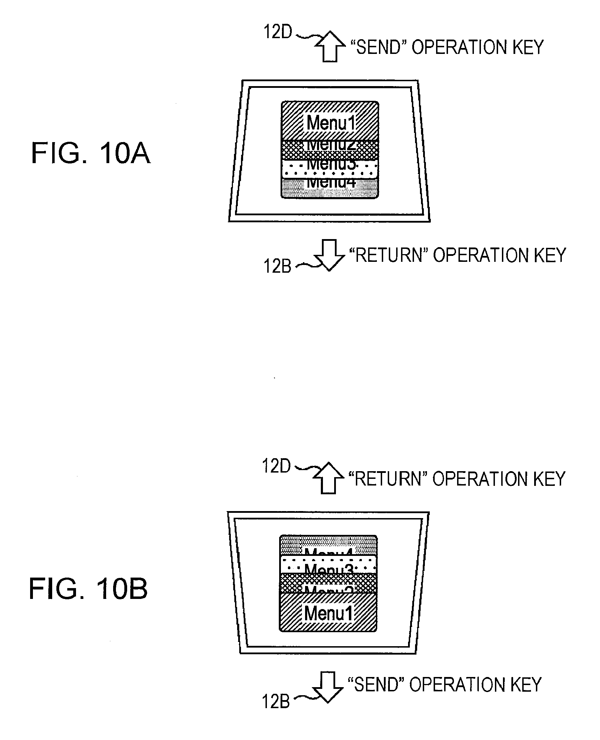

In detail, for example, as shown in Fig. 10A, when the menu item (Menu 1) at the frontmost is shown at the upper portion in the screen, the "send" operation for a menu item is assigned to the arrow key 12D indicating the up-direction and the "return" operation is assigned to the arrow key 12B indicating the downward-direction.

On the other hand, as shown in Fig. 10B, when the menu item (Menu 1) at the frontmost is shown at the lower portion in the screen, the "send" operation is assigned to the arrow key 12B indicating the downward-direction and the "return" operation is assigned to the arrow key 12D indicating the up-direction. This is the same in the left-right direction and the up-down direction.

The series of processes described above may be performed by hardware or by software. When the series of processes is implemented by software, programs constituting the software are installed in a computer. The computer includes a computer assembled by exclusive hardware or, for example, a common personal computer that can perform various functions by installing various programs.

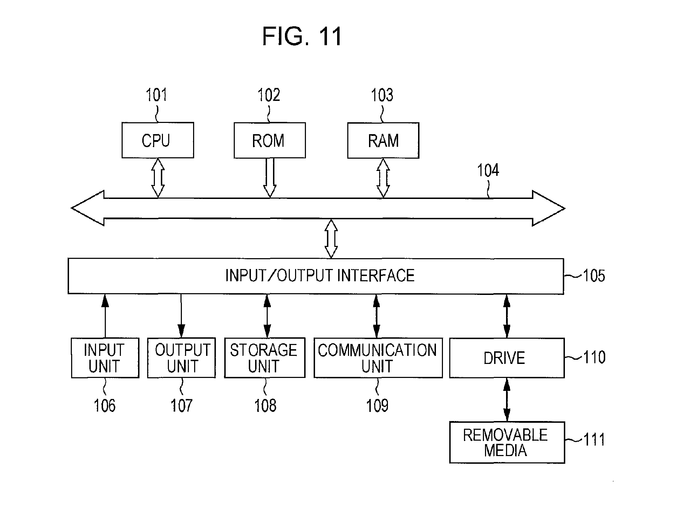

Fig. 11 is a block diagram showing an example of the configuration of hardware of a computer that performs the series of processes described above, using programs.

In the computer, a CPU (Central Processing Unit) 101, a ROM (Read Only Memory) 102, a RAM (Random Access Memory) 103, and a bus 104 are connected with each other.

Further, an I/O interface 105 is connected to the bus 104. An input unit 106, an output unit 107, a memory unit 108, a communication unit 109, and a drive 110 are connected to the I/O interface 105.

The input unit 106 is a keyboard, a mouse, a microphone, or the like. The output unit 107 is a display, a speaker, or the like. The memory unit 108 is a hard disk, a nonvolatile memory, or the like. The communication unit 109 is a network interface or the like. The drive 110 drives a removable recording medium 111, such as a magnetic disk, an optical disk, a magnetic-optical disk, or a semiconductor memory.

In the computer having the configuration described above, as the CPU 101 loads the programs stored, for example, in the memory unit 108 through the I/O interface 105 and the bus 104 to the RAM 103 and executes the programs, the series of processes described above is performed.

The programs can be installed in the memory unit 108 through the I/O interface 105 by mounting the removable recording medium 111 into the drive 110, in the computer. Further, the programs can be installed in the memory unit 108 by receiving with the communication unit 109 through a wire or wireless transmission medium, such as a local network, the internet, or digital satellite broadcasting. Further, the programs may be installed in advance in the ROM 102 or the memory unit 108.

In the specification, the steps described in the flowchart are performed in a time series in accordance with the order of description and may be performed in parallel or at desired timings, for example, when there is a call, not necessarily in time series.

Further, the present disclosure may have the following configurations.
(1) An apparatus including:
   a detector configured to detect an inclination angle of a display surface of a display unit; and
   a display controller configured to control the display unit to display a plurality of menu items disposed along a depth direction perpendicular to the display surface, and to shift the plurality of menu items in a direction parallel to the display surface based on the inclination angle detected by the detector.
(2) The apparatus according to (1), wherein the display controller shifts each of the plurality of menu items in a direction parallel to the display surface a different distance from each of other of the plurality of menu items.
(3) The apparatus according to (1) or (2), wherein the display controller shifts the plurality of menu items in a direction parallel to the display surface a distance proportional to the inclination angle detected by the detector.
(4) The apparatus according to (1) to (3), wherein the display controller shifts the plurality of menu items in a direction parallel to the display surface a distance proportional to a depth of the corresponding menu item.
(5) The apparatus according to (4), wherein the display controller shifts each of the plurality of menu items in a direction parallel to the display surface a distance equal to the depth of the corresponding menu item times a sine of the inclination angle.
(6) The apparatus according to (1) to (5), wherein the display controller shifts the plurality of menu items in a direction parallel to the display surface and in a plane of the inclination angle detected by the detector.
(7) The apparatus according to (1) to (6), further including:
   the display unit which includes a parallax barrier including a plurality of slits extending in a first transverse direction of the display unit,
   wherein the detector detects the inclination angle only around a single axis perpendicular to the first transverse direction.
(8) The apparatus according to (1) to (7), further including:
   the display unit which includes a parallax barrier including a plurality of slits extending in a first transverse direction of the display unit,
   wherein display controller shifts the plurality of menu items a smaller distance in the first transverse direction than in a second transverse direction of the display unit perpendicular to the first transverse direction.
(9) The apparatus according to (1) to (8), further including:
   a first selectable key configured to perform a send operation,
   wherein display controller removes a frontmost menu item of the plurality of menu items and displays a second menu item as a new frontmost menu item when the first selectable key is selected by a user.
(10) The apparatus according to (9), further including:
   a second selectable key configured to perform a return operation,
   wherein display controller moves a rearmost menu item of the plurality of menu items to a front and displays the rearmost menu item as the new frontmost menu item when the second selectable key is selected by the user.
(11) The apparatus according to (10), further including:
   a third selectable key and a fourth selectable key,
   the first selectable key, the second selectable key, the third selectable key, and the fourth selectable key being up, down, left, and right keys, and
   one of the first selectable key, the second selectable key, the third selectable key, and the fourth selectable key being dynamically assigned to perform the send operation and another of the first selectable key, the second selectable key, the third selectable key, and the fourth selectable key being dynamically assigned to perform the return operation based on the inclination angle detected by the detector.
(12) The apparatus according to (1) to (11), wherein the display controller is configured to control the display unit to display a frontmost menu item of the plurality of menu items, and to shift all of the plurality of menu items except the frontmost menu item based on the inclination angle detected by the detector.
(13) The apparatus according to (1) to (12), wherein the display controller is configured to control the display unit to animate changes in the plurality of menu items based on the inclination angle detected by the detector.
(14) The apparatus according to (1) to (13), further including:
   the display unit which includes a parallax barrier including a plurality of shields and a plurality of slits each extending in a first transverse direction of the display unit, each of the plurality of shields and the plurality of slits being rectangles that are long in the first transverse direction.
(15) The apparatus according to (1) to (14), wherein the display surface is formed by an XY plane composed of an X axis and a Y axis which are perpendicular to each other, the detector is a single axis sensor detecting rotation around the X axis, the display controller divides a plurality of parallax images into a predetermined number in an X direction and alternately displays the plurality of divided parallax images in the X direction on the display unit.
(16) The apparatus according to (1) to (15), wherein the display surface is formed by an XY plane composed of an X axis and a Y axis which are perpendicular to each other, the detector is a bi-axis sensor detecting rotation around the X axis and the Y axis, the display controller creates a plurality of parallax images such that shifted amounts of the plurality of menu items corresponding to a rotation angle about the Y axis are larger than shifted amounts of the plurality of menu items corresponding to a same rotation angle about the X axis, divides the plurality of parallax images into a predetermined number in an X direction, and alternately displays the plurality of divided parallax images in the X direction on the display unit.
(17) The apparatus according to (1) to (16), wherein the apparatus is a personal digital assistant.
(18) The apparatus according to (1) to (16), wherein the apparatus is a portable navigation device.
(19) A method including:
   displaying a plurality of menu items disposed along a depth direction perpendicular to a display surface of a display unit;
   detecting an inclination angle of the display surface; and
   shifting the plurality of menu items in a direction parallel to the display surface based on the inclination angle detected by the detecting.
(20) A non-transitory computer readable medium encoded with a program that, when loaded on a processor, causes the processor to perform a method including:
   displaying a plurality of menu items disposed along a depth direction perpendicular to a display surface of a display unit;
   detecting an inclination angle of the display surface; and
   shifting the plurality of menu items in a direction parallel to the display surface based on the inclination angle detected by the detecting.

## Claims

1. An apparatus comprising:
a detector configured to detect an inclination angle of a display surface of a display unit; and
a display controller configured to control the display unit to display a plurality of menu items disposed along a depth direction perpendicular to the display surface, and to shift the plurality of menu items in a direction parallel to the display surface based on the inclination angle detected by the detector.

2. The apparatus according to claim 1, wherein the display controller shifts each of the plurality of menu items in a direction parallel to the display surface a different distance from each of other of the plurality of menu items.

3. The apparatus according to claim 1, wherein the display controller shifts the plurality of menu items in a direction parallel to the display surface a distance proportional to the inclination angle detected by the detector.

4. The apparatus according to claim 1, wherein the display controller shifts the plurality of menu items in a direction parallel to the display surface a distance proportional to a depth of the corresponding menu item.

5. The apparatus according to claim 4, wherein the display controller shifts each of the plurality of menu items in a direction parallel to the display surface a distance equal to the depth of the corresponding menu item times a sine of the inclination angle.

6. The apparatus according to claim 1, wherein the display controller shifts the plurality of menu items in a direction parallel to the display surface and in a plane of the inclination angle detected by the detector.

7. The apparatus according to anyone of claims 1 to 6, further comprising:
the display unit which includes a parallax barrier including a plurality of slits extending in a first transverse direction of the display unit,
wherein the detector detects the inclination angle only around a single axis perpendicular to the first transverse direction.

8. The apparatus according to claim 1, further comprising:
the display unit which includes a parallax barrier including a plurality of slits extending in a first transverse direction of the display unit,
wherein display controller shifts the plurality of menu items a smaller distance in the first transverse direction than in a second transverse direction of the display unit perpendicular to the first transverse direction.

9. The apparatus according to anyone of claims 1 to 8, further comprising:
a first selectable key configured to perform a send operation,
wherein display controller removes a frontmost menu item of the plurality of menu items and displays a second menu item as a new frontmost menu item when the first selectable key is selected by a user.

10. The apparatus according to claim 9, further comprising:
a second selectable key configured to perform a return operation,
wherein display controller moves a rearmost menu item of the plurality of menu items to a front and displays the rearmost menu item as the new frontmost menu item when the second selectable key is selected by the user.

11. The apparatus according to claim 10, further comprising:
a third selectable key and a fourth selectable key,
the first selectable key, the second selectable key, the third selectable key, and the fourth selectable key being up, down, left, and right keys, and
one of the first selectable key, the second selectable key, the third selectable key, and the fourth selectable key being dynamically assigned to perform the send operation and another of the first selectable key, the second selectable key, the third selectable key, and the fourth selectable key being dynamically assigned to perform the return operation based on the inclination angle detected by the detector.

12. The apparatus according to anyone of claims 1 to 11, wherein the display controller is configured to control the display unit to display a frontmost menu item of the plurality of menu items, and to shift all of the plurality of menu items except the frontmost menu item based on the inclination angle detected by the detector.

13. The apparatus according to anyone of claims 1 to 12, wherein the display controller is configured to control the display unit to animate changes in the plurality of menu items based on the inclination angle detected by the detector.

14. The apparatus according to anyone of claims 1 to 6, further comprising:
the display unit which includes a parallax barrier including a plurality of shields and a plurality of slits each extending in a first transverse direction of the display unit, each of the plurality of shields and the plurality of slits being rectangles that are long in the first transverse direction.

15. The apparatus according to anyone of claims 1 to 14, wherein the display surface is formed by an XY plane composed of an X axis and a Y axis which are perpendicular to each other, the detector is a single axis sensor detecting rotation around the X axis, the display controller divides a plurality of parallax images into a predetermined number in an X direction and alternately displays the plurality of divided parallax images in the X direction on the display unit.

16. The apparatus according to anyone of claims 1 to 14, wherein the display surface is formed by an XY plane composed of an X axis and a Y axis which are perpendicular to each other, the detector is a bi-axis sensor detecting rotation around the X axis and the Y axis, the display controller creates a plurality of parallax images such that shifted amounts of the plurality of menu items corresponding to a rotation angle about the Y axis are larger than shifted amounts of the plurality of menu items corresponding to a same rotation angle about the X axis, divides the plurality of parallax images into a predetermined number in an X direction, and alternately displays the plurality of divided parallax images in the X direction on the display unit.

17. The apparatus according to anyone of claims 1 to 16, wherein the apparatus is a personal digital assistant.

18. The apparatus according to anyone of claims 1 to 16, wherein the apparatus is a portable navigation device.

19. A method comprising:
displaying a plurality of menu items disposed along a depth direction perpendicular to a display surface of a display unit;
detecting an inclination angle of the display surface; and
shifting the plurality of menu items in a direction parallel to the display surface based on the inclination angle detected by the detecting.

20. A non-transitory computer readable medium encoded with a program that, when loaded on a processor, causes the processor to perform a method comprising:
displaying a plurality of menu items disposed along a depth direction perpendicular to a display surface of a display unit;
detecting an inclination angle of the display surface; and
shifting the plurality of menu items in a direction parallel to the display surface based on the inclination angle detected by the detecting.
